# EUROPEAN PATENT APPLICATION

(11) **EP 4 404 685 A1**
(43) Date of publication of application: **24.07.2024**
(21) Application number: 22869904.7
(22) Date of filing: 09.09.2022
(51) Int. Cl.: H04W 76/15, H04W 48/10, H04W 72/0446, H04W 84/12

(54) **COMMUNICATION DEVICE, CONTROL METHOD, AND PROGRAM**

(30) Priority: 17.09.2021 JP 2021152317
(71) Applicant: CANON KABUSHIKI KAISHA, Tokyo 146-8501 (JP)
(72) Inventor: INOHIZA Hirohiko, Tokyo 146-8501 (JP)
(74) Representative: Canon Europe Limited
(86) International application number: PCT/JP2022/033819
(87) International publication number: WO 2023/042757

(57) **Abstract**

In a case where a communication apparatus establishes a connection with another communication apparatus via a first link and a second link, the communication apparatus sets a transmission interval of a beacon frame to be transmitted via the first link and a transmission interval of a beacon frame to be transmitted via the second link to the same value, and based on the transmission intervals of the beacon frames set to the same value, the another communication apparatus sets periods when the beacon frames are received.

## Description

### Technical Field

The present invention relates to a communication apparatus that performs wireless communication.

### Background Art

As a wireless local area network (WLAN) communication standard formulated by the Institute of Electrical and Electronics Engineers (IEEE), the IEEE 802.11 series is known. WLAN is the abbreviation of wireless local area network. The IEEE 802.11 series standards include standards such as the IEEE 802.11a/b/g/n/ac/ax standards.

Patent literature 1 discusses the execution of wireless communication using orthogonal frequency-division multiple access (OFDMA) in the IEEE 802.11ax standard. In the IEEE 802.11ax standard, high peak throughput is achieved by executing wireless communication using OFDMA.

The IEEE considers the formulation of the IEEE 802.1 The standard as a new standard in the IEEE 802.11 series to further improve the throughput and improve the frequency use efficiency. The IEEE 802.11be standard considers multi-link communication in which a single access point (AP) establishes a plurality of links with a single station (STA) via a plurality of different frequency channels and communicates with the STA in parallel.

The AP also transmits a beacon frame at a predetermined interval, and information regarding the transmission interval (the beacon interval (BI)) of the beacon frame is stored in the beacon frame. The STA determines a listen interval as a wake-up interval in a power saving operation based on the received information regarding the transmission interval of the beacon frame and notifies the AP of the listen interval when connecting to the AP. According to the listen interval value of the STA, the AP determines the buffer holding period of data to be transmitted to the STA.

### Citation List

### Patent Literature

PTL 1: Japanese Patent Application Laid-Open No. 2018-50133

### Summary of Invention

### Technical Problem

In multi-link communication, if the transmission intervals of beacon frames of links are different from each other, an STA needs to acquire the transmission intervals of the beacon frames of the links and determine a listen interval common to all the links based on the information.

An existing beacon frame, however, cannot notify the STA of the transmission interval of a beacon frame of another link. Thus, to determine the listen interval, the STA needs to receive the beacon frames of all the links. Thus, when the transmission intervals of beacon frames of an AP performing the multi-link communication are acquired, overhead in communication may increase.

In view of the above issue, the present invention is directed to reducing overhead in communication when the transmission intervals of beacon frames are acquired in a case where multi-link communication is performed.

### Solution to Problem

To achieve the above purpose, a communication apparatus according to the present invention includes an establishment unit configured to establish a connection with another communication apparatus via a first link and a second link, and a unit configured to, in a case where the establishment unit establishes a connection with the another communication apparatus via the first link and the second link, perform control to set a transmission interval of a beacon frame to be transmitted via the first link and a transmission interval of a beacon frame to be transmitted via the second link to the same value.

Furthermore, a communication apparatus according to the present invention includes an establishment unit configured to establish a connection with another communication apparatus via a first link and a second link, an acquisition unit configured to acquire a beacon transmission interval included in a management frame received from the another communication apparatus and compliant with an IEEE 802.11 standard, the beacon transmission interval set to the same value between the first link and the second link, and a setting unit configured to, based on the beacon transmission interval acquired by the acquisition unit, set a period when a beacon frame is received via the first link and a period when a beacon frame is received via the second link.

### Advantageous Effects of Invention

According to the present invention, it is possible to reduce overhead in communication when the transmission intervals of beacon frames are acquired in a case where multi-link communication is performed.

### Brief Description of Drawings

[Fig. 1] Fig. 1 is a diagram illustrating an example of a configuration of a network that an access point (AP) 102 and a station (STA) 103 join.
[Fig. 2] Fig. 2 is a diagram illustrating a hardware configuration of each of the AP 102 and the STA 103.
[Fig. 3] Fig. 3 is a diagram illustrating a functional configuration of the AP 102.
[Fig. 4] Fig. 4 is a diagram illustrating a functional configuration of the STA 103.
[Fig. 5] Fig. 5 is a sequence diagram illustrating an example of a connection process between the AP 102 and the STA 103.
[Fig. 6] Fig. 6 is a flowchart illustrating an example of an AP setting process on the AP 102.
[Fig. 7] Fig. 7 is a diagram illustrating an example of a multi-link communication settings screen in the AP 102.
[Fig. 8] Fig. 8 is a diagram illustrating an example of a multi-link communication settings screen in the AP 102.
[Fig. 9] Fig. 9 is a diagram illustrating an example of a communication settings screen for each frequency band in the AP 102.
[Fig. 10] Fig. 10 is a diagram illustrating an example of a communication settings screen for each frequency band in the AP 102.
[Fig. 11] Fig. 11 is a flowchart in a case where the AP 102 performs a communication process.
[Fig. 12] Fig. 12 is a flowchart in a case where the STA 103 performs a connection process.

### Description of Embodiments

With reference to the attached drawings, exemplary embodiments of the present invention will be described in detail below. The configurations illustrated in the following exemplary embodiments are merely examples, and the present invention is not limited to the configurations illustrated in the figures.

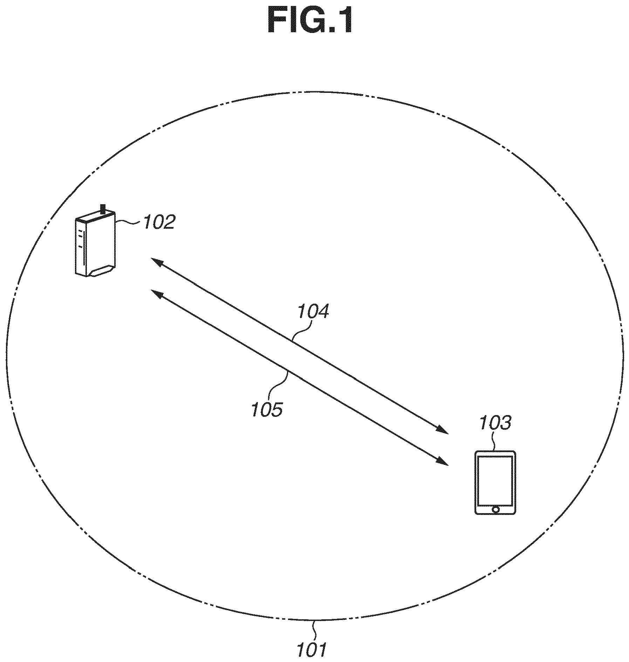

Fig. 1 illustrates the configuration of a network that an access point (AP) 102 and a station (STA) 103 according to the present exemplary embodiment join. The AP 102 is a communication apparatus having the function of constructing a network 101. The network 101 is a wireless network.

The station (STA) 103 is a communication apparatus having the function of joining the network 101. Each communication apparatus is compatible with the Institute of Electrical and Electronics Engineers (IEEE) 802.11be (Extremely High Throughput (EHT)) standard and can execute wireless communication compliant with the IEEE 802.11be standard via the network 101. IEEE is the abbreviation of the Institute of Electrical and Electronics Engineers.

EHT is the abbreviation of Extremely High Throughput. EHT may also be interpreted as the abbreviation of Extreme High Throughput. Each communication apparatus can communicate in frequency bands such as the 2.4 GHz band, the 5 GHz band, and the 6 GHz band. The frequency bands used by each communication apparatus are not limited to these, and a different frequency band such as the 60 GHz band may be used. Each communication apparatus can communicate using 20 MHz, 40 MHz, 80 MHz, 160 MHz, and 320 MHz bandwidths.

The AP 102 and the STA 103 execute orthogonal frequency-division multiple access (OFDMA) communication compliant with the IEEE 802.11be standard and thereby can achieve multi-user (MU) communication in which signals of a plurality of users are multiplexed together. OFDMA communication is the abbreviation of orthogonal frequency-division multiple access. In OFDMA communication, parts (resource units (RUs)) of a divided frequency band are allocated to STAs without overlapping each other, and carrier waves allocated to the STAs are orthogonal to each other. Thus, an AP can communicate with a plurality of STAs in parallel.

The AP 102 and the STA 103 also execute multi-link communication in which the AP 102 and the STA 103 establish links via a plurality of frequency channels and communicate with each other. An AP that executes multi-link communication is also referred to as an "AP multi-link device (MLD)". The frequency channels refer to frequency channels defined by an IEEE 802.11 series standard and frequency channels that enable the execution of wireless communication compliant with the IEEE 802.11 series standard. The IEEE 802.11 series standard defines a plurality of frequency channels in frequency bands such as the 2.4 GHz band, the 5 GHz band, and the 6 GHz band. The IEEE 802.11 series standard defines the bandwidth of each frequency channel as 20 MHz. A bandwidth of 40 MHz or more may be used in a single frequency channel by bonding a frequency channel and an adjacent frequency channels. For example, the AP 102 can establish a first link 104 via a first frequency channel in the 2.4 GHz band and a second link 105 via a second frequency channel in the 5 GHz band with the STA 103 and communicate with the STA 103 via both links. In this case, the AP 102 maintains the second link 105 via the second frequency channel in parallel with the first link 104 via the first frequency channel. As described above, the AP 102 establishes a plurality of links corresponding to a plurality of frequency channels different from each other with the STA 103 and thereby can improve the throughput in communication with the STA 103. The AP 102 and the STA 103 may establish a plurality of links different from each other in frequency band in the multi-link communication. For example, the AP 102 and the STA 103 may establish a third link in the 6 GHz band in addition to the first link 104 in the 2.4 GHz band and the second link 105 in the 5 GHz band. Alternatively, the AP 102 and the STA 103 may establish links via a plurality of different channels included in the same frequency band. For example, the AP 102 and the STA 103 may establish the first link 104 via ch. 1 in the 2.4 GHz band and the second link 105 via ch. 5 in the 2.4 GHz band. Links in the same frequency band and links in different frequency bands may coexist. For example, the AP 102 and the STA 103 may establish a third link via ch. 36 in the 5 GHz band in addition to the first link 104 via ch. 1 in the 2.4 GHz band and the second link 105 via ch. 5 in the 2.4 GHz band. The AP 102 establishes a plurality of connections in different frequency bands with the STA 103, whereby, even if a certain band is congested, the AP 102 can communicate with STA 103 in another band. Thus, the AP 102 can prevent a decrease in the throughput in communication with the STA 103.

The plurality of links established by the AP 102 and the STA 103 in the multi-link communication may only need to be at least different from each other in frequency channel. The channel intervals between the frequency channels of the plurality of links established by the AP 102 and the STA 103 in the multi-link communication may only need to be at least greater than 20 MHz. In the present exemplary embodiment, the AP 102 and the STA 103 establish the first link 104 and the second link 105, but may establish three or more links.

In a case where the AP 102 and the STA 103 execute the multi-link communication, the AP 102 constructs a plurality of wireless networks to correspond to the respective links. In this case, the AP 102 internally includes a plurality of APs and causes the APs to operate to construct wireless networks for the respective links. The APs included within the AP 102 may be one or more physical APs, or may be a plurality of virtual APs configured on a single physical AP. In a case where the plurality of links is established in frequency channels belonging to a common frequency band, the plurality of links may use a common wireless network.

In a case where the AP 102 and the STA 103 perform the multi-link communication, each of the AP 102 and the STA 103 divides a single piece of data and transmits the divided pieces of data to the partner apparatus via the plurality of links. Alternatively, each of the AP 102 and the STA 103 may transmit the same data via each of the plurality of links so that communication via one of the links is backup communication for communication via the other links. Specifically, the AP 102 transmits the same data to the STA 103 via a first link via a first frequency channel and a second link via a second frequency channel. In this case, for example, even if an error occurs in communication via the first link, the STA 103 can receive the data transmitted from the AP 102 because the same data is transmitted via the second link. Alternatively, each of the AP 102 and the STA 103 may appropriately use the links according to the type of the frame or the type of the data to be communicated. For example, the AP 102 may transmit a management frame via a first link and transmit a data frame including data via a second link. Specifically, the management frame refers to a beacon frame, a probe request frame, a probe response frame, an association request frame, or an association response frame. In addition to these frames, a disassociation frame, an authentication frame, a de-authentication frame, or an action frame is also referred to as a "management frame". The beacon frame is a frame that gives a notification of information regarding the network. The probe request frame is a frame that requests network information. The probe response frame is a frame that is a response to the probe request frame and provides network information. The association request frame is a frame that requests a connection. The association response frame is a frame that is a response to the association request frame and indicates permission to make a connection or an error. The disassociation frame is a frame that disconnects a connection. The authentication frame is a frame that authenticates the partner apparatus. The de-authentication frame is a frame that suspends the authentication of the partner apparatus and disconnects a connection. The action frame is a frame for performing an additional function other than the above. Each of the AP 102 and the STA 103 transmits and receives a management frame compliant with the IEEE 802.11 series standard. Alternatively, for example, in a case where the AP 102 transmits data regarding a captured image, the AP 102 may transmit meta-information such as the date, the parameters when the image is captured (the stop value and the shutter speed), and position information via a first link and transmit pixel information via a second link.

The AP 102 and the STA 103 may be able to execute multiple-input and multiple-output (MIMO) communication. In this case, each of the AP 102 and the STA 103 includes a plurality of antennas, and one of the AP 102 and the STA 103 sends different signals from the respective antennas using the same frequency channel. The receiving end simultaneously receives all the signals reaching the receiving end from a plurality of streams using the plurality of antennas, and separates and decodes the signals from the respective streams.

As described above, the AP 102 and the STA 103 execute the MIMO communication and thereby can communicate more data in the same time than in a case where the AP 102 and the STA 103 do not execute the MIMO communication. In a case where the AP 102 and the STA 103 perform the multi-link communication, the AP 102 and the STA 103 may execute the MIMO communication in some of the links.

Although the AP 102 and the STA 103 are compatible with the IEEE 802.11be standard, in addition to the IEEE 802.11be standard, the AP 102 and the STA 103 may also be compatible with at least any one of legacy standards that are standards before the IEEE 802.11be standard and succession standards of the IEEE 802.11be standard. The legacy standards refer to the IEEE 802.11a/b/g/n/ac/ax standards. In the present exemplary embodiment, at least any one of the IEEE 802.11a/b/g/n/ac/ax/be standards and the succession standards is referred to as "the IEEE 802.11 series standard".

In addition to the IEEE 802.11 series standard, the AP 102 and the STA 103 may also be compatible with another communication standard such as Bluetooth (registered trademark), near-field communication (NFC), ultra-wideband (UWB), Zigbee, or MultiBand OFDM Alliance (MBOA). UWB is the abbreviation of ultra-wideband. MBOA is the abbreviation of MultiBand OFDM Alliance. OFDM is the abbreviation of orthogonal frequency-division multiplexing. NFC is the abbreviation of near-field communication. UWB includes Wireless Universal Serial Bus (USB), Wireless 1394, and WiNET. The AP 102 and the STA 103 may also be compatible with a wired communication standard for a wired local area network (LAN).

Specific examples of the AP 102 include a wireless LAN router and a personal computer (PC). The present invention, however, is not limited to these. The AP 102 may be any communication apparatus capable of executing multi-link communication with another communication apparatus. Alternatively, the AP 102 may be an information processing apparatus such as a wireless chip capable of executing wireless communication compliant with the IEEE 802.11be standard. Specific examples of the STA 103 include a camera, a tablet, a smartphone, a PC, a mobile phone, and a video camera. The present invention, however, is not limited to these. The STA 103 may be a communication apparatus capable of executing multi-link communication with another communication apparatus. Alternatively, the STA 103 may be an information processing apparatus such as a wireless chip capable of executing wireless communication compliant with the IEEE 802.11be standard. Although the network in Fig. 1 is a network including a single AP and a single STA, the numbers of APs and STAs are not limited to these. Each information processing apparatus such as a wireless chip includes an antenna for transmitting a generated signal.

In the present exemplary embodiment, the AP 102 is an access point, and the STA 103 is a station. The present invention, however, is not limited to this. Both the AP 102 and the STA 103 may be stations. In this case, the AP 102 is a station, but operates as an apparatus having the function of constructing a wireless network for establishing links with the STA 103.

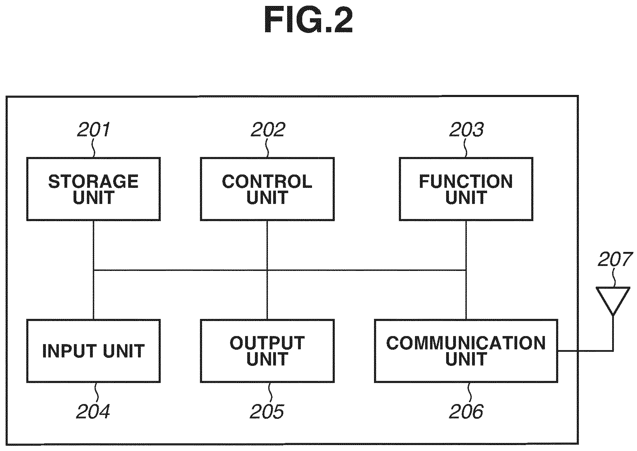

Fig. 2 illustrates an example of the hardware configuration of the AP 102. The AP 102 includes a storage unit 201, a control unit 202, a function unit 203, an input unit 204, an output unit 205, a communication unit 206, and an antenna 207.

The storage unit 201 includes one or more memories such as a read-only memory (ROM) and a random-access memory (RAM) and stores computer programs for performing various operations described below, and various types of information such as communication parameters for wireless communication. ROM is the abbreviation of read-only memory. RAM is the abbreviation of random-access memory. As the storage unit 201, in addition to the memories such as the ROM and the RAM, a storage medium such as a flexible disk, a hard disk, an optical disc, a magneto-optical disc, a Compact Disc Read-Only Memory (CD-ROM), a Compact Disc Recordable (CD-R), a magnetic tape, a non-volatile memory card, or a digital versatile disc (DVD) may be used. Alternatively, the storage unit 201 may include a plurality of memories.

The control unit 202 includes one or more processors such as a central processing unit (CPU) and a microprocessor unit (MPU) and controls the entirety of the AP 102 by executing a computer program stored in the storage unit 201. The control unit 202 may cooperate with a computer program and an operating system (OS) stored in the storage unit 201 to control the entirety of the AP 102. The control unit 202 also generates data and a signal (a wireless frame) to be transmitted through communication with another communication apparatus. CPU is the abbreviation of central processing unit. MPU is the abbreviation of micro processing unit. Alternatively, the control unit 202 may include a plurality of processors such as multi-core processors and control the entirety of the AP 102 using the plurality of processors.

The control unit 202 controls the function unit 203 to execute a predetermined process such as wireless communication, the capturing of an image, printing, or projection. The function unit 203 is hardware for the AP 102 to execute the predetermined process.

The input unit 204 receives various operations from a user. The output unit 205 provides various outputs to the user through a monitor screen or a loudspeaker. The outputs provided by the output unit 205 may be display on the monitor screen, the output of a sound from the loudspeaker, or the output of a vibration. Both the input unit 204 and the output unit 205 may be achieved by a single module as in a touch panel. Each of the input unit 204 and the output unit 205 may be integrated with or separate from the AP 102.

The communication unit 206 controls wireless communication compliant with the IEEE 802.11be standard. In addition to the IEEE 802.11be standard, the communication unit 206 may also control wireless communication compliant with another IEEE 802.11 series standard, or control wired communication via a wired LAN. The communication unit 206 controls the antenna 207 to transmit and receive a wireless signal for wireless communication generated by the control unit 202. The AP 102 may include a plurality of communication units 206. In a case where the AP 102 including the plurality of communication units 206 establishes a plurality of links in multi-link communication, the AP 102 establishes at least one link with respect to each communication unit 206. Alternatively, the AP 102 may establish a plurality of links using a single communication unit 206. In this case, the communication unit 206 switches frequency channels that operate in a time-sharing manner, thereby executing communication via the plurality of links. In a case where the AP 102 is compatible with the NFC standard or the Bluetooth standard in addition to the IEEE 802.11be standard, the AP 102 may control wireless communication compliant with these communication standards. In a case where the AP 102 can execute wireless communication compliant with a plurality of communication standards, the AP 102 may individually include a communication unit and an antenna compatible with each of the communication standards. The AP 102 communicates data such as image data, document data, or video data with the STA 103 via the communication unit 206. The antenna 207 may be configured separately from the communication unit 206, or may be configured together with the communication unit 206 as a single module.

The antenna 207 is an antenna capable of communicating in the 2.4 GHz band, the 5 GHz band, and the 6 GHz band. Although the AP 102 includes a single antenna in the present exemplary embodiment, the AP 102 may include a different antenna with respect to each frequency band. In a case where the AP 102 includes a plurality of antennas, the AP 102 may include a communication unit 206 corresponding to each antenna.

The STA 103 can also have a hardware configuration similar to that of the AP 102.

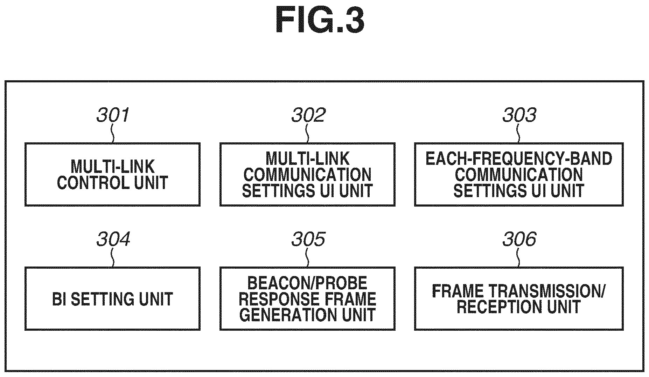

Fig. 3 illustrates the functional configuration of the AP 102 according to the present exemplary embodiment.

A multi-link control unit 301 is a block that controls a communication start process for the AP 102 to establish one or more links to be used in wireless communication with the STA 103, a link addition/deletion process after the communication is started, and a communication end process for deleting all the links. Specifically, a connection process includes an authentication process, an association process, and a 4-way-handshake (4WHS) process.

A multi-link communication settings user interface (UI) unit 302 is, for example, a block that provides a UI for the user to access the AP 102 using a web browser and input the settings of multi-link communication of the AP 102. Through this UI unit, the enabling and the disabling of the multi-link communication are set, the channels of links are set, and the beacon interval (BI) value used in common by all the links is set. An each-frequency-band communication settings UI unit 303 is a block that, in a case where an AP in each frequency band is desired to independently operate without performing the multi-link communication, provides a UI for making the communication settings of the AP in each frequency band. Through this UI unit, the channel of the AP in each frequency band is set, and the BI value of the AP in each frequency band is set.

A BI setting unit 304 is a block that sets the BI value set through a UI unit as the beacon interval of a beacon/probe response frame of each link.

A beacon/probe response frame generation unit 305 is a block that generates a beacon/probe response frame including a beacon interval field set by the BI setting unit 304.

A frame transmission/reception unit 306 transmits a wireless frame including a beacon/probe response frame or a data frame and receives a wireless frame from the partner apparatus.

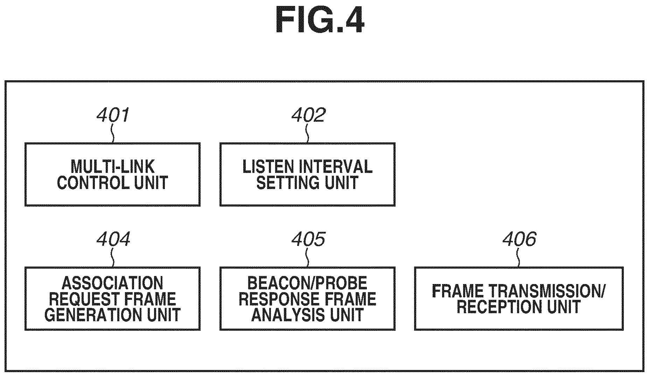

Fig. 4 illustrates the functional configuration of the STA 103 according to the present exemplary embodiment.

A multi-link control unit 401 is a block that controls a communication start process for the STA 103 to establish one or more links to be used in wireless communication with the AP 102, a link addition/deletion process after the communication is started, and a communication end process for deleting all the links. Specifically, a connection process includes an authentication process, an association process, and a 4-way-handshake (4WHS) process.

A listen interval setting unit 402 is a block in which, based on the BI value received from the AP 102, the STA calculates and determines the value of a listen interval indicating a wake-up interval in a power saving operation. The IEEE 802.11 standards define that the listen interval value is a multiple of the BI value.

An association request frame generation unit 404 generates an association request frame that includes the listen interval determined by the listen interval setting unit 402 and is used to connect to the AP 102.

A beacon/probe response frame analysis unit 405 is a block that receives a beacon/probe response frame from the AP 102 and analyzes parameters including the BI value common to all the links.

A frame transmission/reception unit 406 transmits a wireless frame including an association request frame or a data frame and receives a wireless frame including a beacon/probe response frame or a data frame from the partner apparatus.

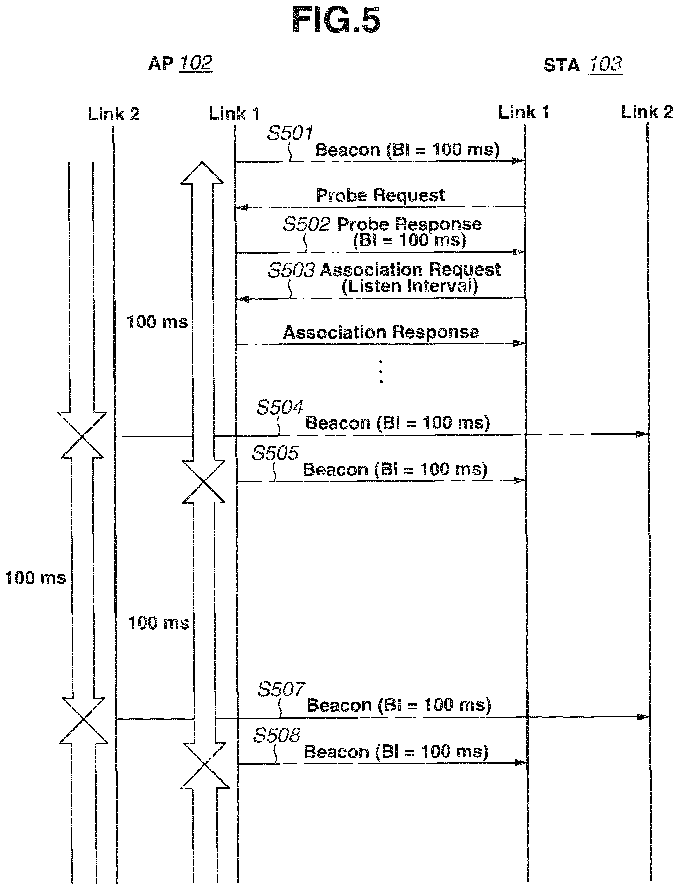

Fig. 5 illustrates an example of a sequence diagram illustrating a connection process between the AP 102 and the STA 103. In the present exemplary embodiment, the BI values of a link 1 and a link 2 are both 100 ms.

In step S501, the AP 102 transmits a beacon frame via the link 1 in the state where 100 ms, which is the BI value common to the plurality of links, is set in the beacon interval field of the beacon frame. Also in steps S505 and S508, the AP 102 transmits beacon frames at an interval of 100 ms. The STA 103 receives the beacon frame transmitted in step S501 and acquires the BI value of the received beacon frame. Based on the acquired BI value, the STA 103 calculates the value of a listen interval indicating a wake-up interval in a power saving operation. Further, the STA 103 stores the listen interval value in an association request frame. Then, in step S503, the STA 103 transmits the association request frame to the AP 102.

As illustrated in steps S504 and S507, the AP 102 transmits beacon frames at an interval of 100 ms, which is the same beacon transmission interval as that of the link 1, also via the link 2.

In the present exemplary embodiment, an example has been illustrated where the BI value is acquired from the beacon frame transmitted from the AP 102. The present invention, however, is not limited to this. The BI value may be acquired by transmitting a probe request frame to the AP 102 and receiving a probe response frame transmitted as a response from the AP 102 in step S502.

As described above, the AP 102 sets the BI values of a plurality of links to the same value and transmits the BI value common to the plurality of links to the STA 103, and the STA 103 can also use the BI value received via one of the links as the BI value common to the plurality of links. Thus, the STA 103 does not need to individually acquire the BI value of each of the plurality of links. Thus, it is possible to reduce overhead in a BI value acquisition process.

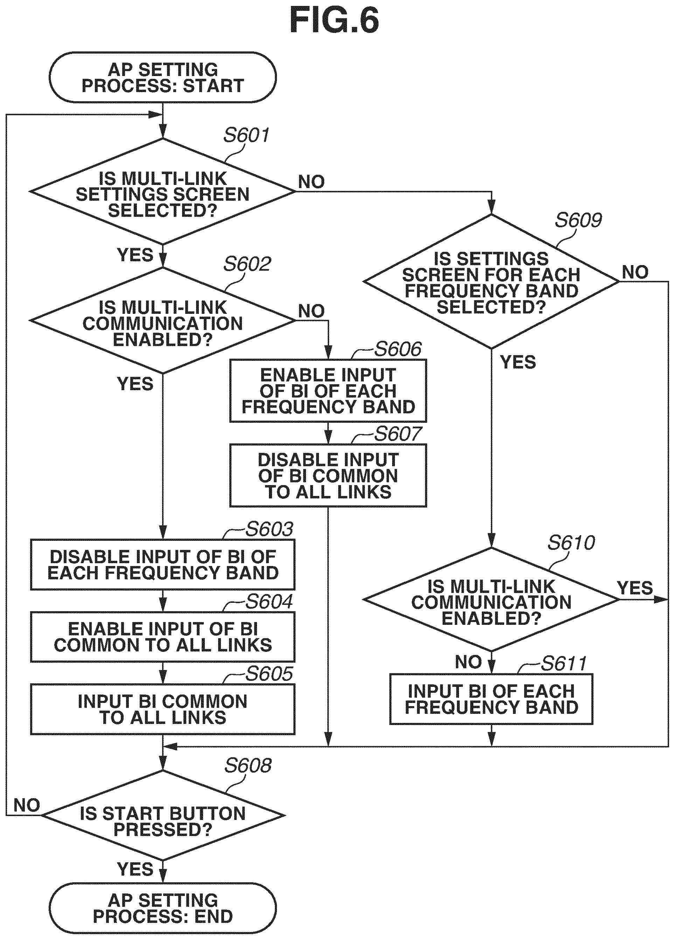

Fig. 6 is a flowchart illustrating the flow of a process performed by the control unit 202 of the AP 102 executing a program stored in the storage unit 201 of the AP 102 capable of executing multi-link communication.

This flowchart is started if the AP 102 is accessed using the web browser.

In step S601, it is determined whether a multi-link settings screen is selected.

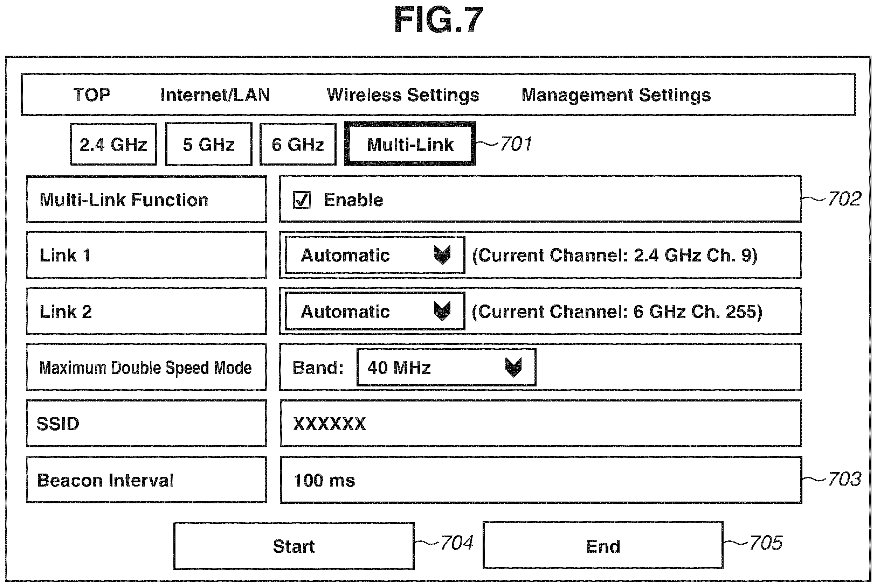

Fig. 7 illustrates an example of the multi-link settings screen in the AP 102. In Fig. 7, the selection of an item 701 indicates the multi-link settings screen. In the present exemplary embodiment, if the "multi-link" tab 701 is selected, it is determined that the multi-link settings screen is selected. If at least two frequency bands among the 2.4 GHz, the 5 GHz, and the 6 GHz in Fig. 7 are selected, it may be determined that the multi-link communication settings screen is selected.

If it is determined in step S601 that the multi-link settings screen is selected, it is determined whether the multi-link communication is enabled (step S602). In the determination in step S602, it is determined whether the multi-link communication is enabled in an item 702 in Fig. 7.

If it is determined in step S602 that the multi-link communication is enabled, then in step S603, the input of the BI of each frequency band is disabled.

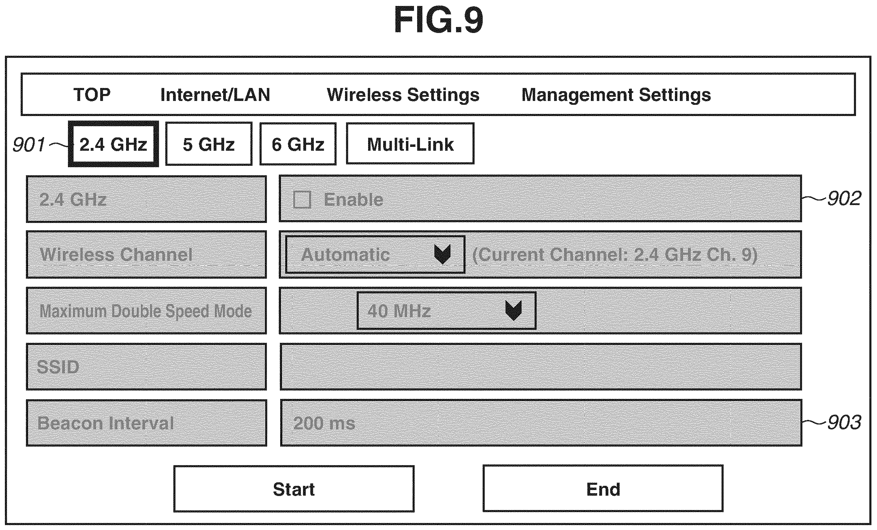

With reference to Figs. 7 and 9, a description is given of the flow of disabling the input of the BI of each frequency band in step S603 in a case where it is determined in step S602 that the multi-link communication is enabled.

Fig. 9 illustrates an example of a settings screen for each frequency band in the AP 102. Fig. 9 illustrates an example of a screen having transitioned to the settings of each frequency band in the state where the multi-link communication is set to enabled in Fig. 7. If the multi-link function is enabled in the item 702 in Fig. 7, the communication settings of the frequency band are automatically disabled as illustrated in Fig. 9 so that the beacon transmission interval is not set for each link. Thus, in this state, the channel in the 2.4 GHz band cannot be selected, and the BI value used in the frequency band of the 2.4 GHz band cannot be set in an item 903.

If the input of the BI of each frequency band is disabled in step S603, then in step S604, a screen for inputting the BI common to all the links is enabled, and the BI common to all the links is input (step S605). To give a description using Fig. 7 as an example, the channel of each link can be selected, and the BI value used in common by all the links can be set in an item 703. In the example of Fig. 7, 100 ms is set as the BI value.

In step S608, it is determined whether a start button is pressed. If it is determined that the start button is pressed, this flowchart ends. In the example of Fig. 7, if a start button 704 is pressed, the operation of the AP is started using the parameters set in the UI, and this flowchart ends. If an end button 705 is pressed on this screen, the operation of the AP is ended.

If it is determined in step S602 that the multi-link communication is not enabled, then in step S606, the input of the BI of each frequency band is enabled, and the input of the BI common to all the links is disabled (step S607).

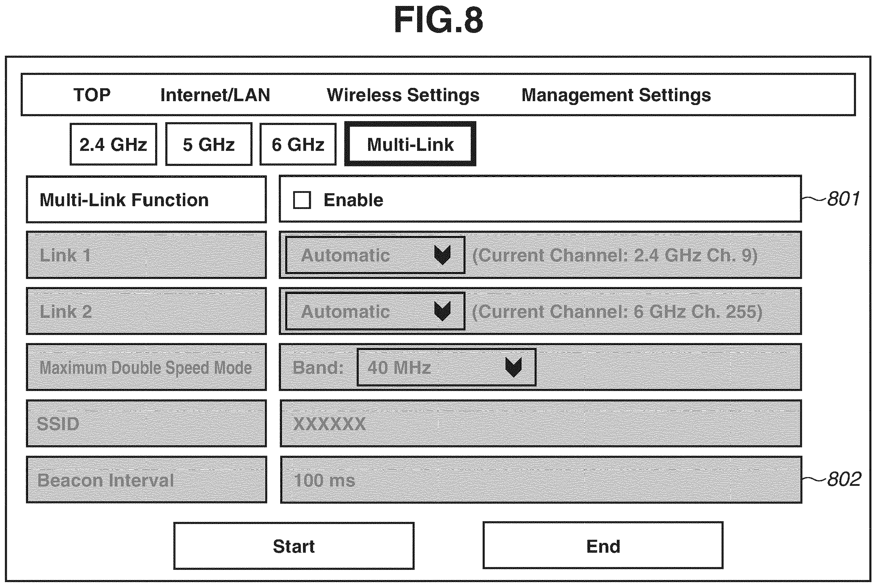

Fig. 8 illustrates an example of a multi-link settings screen in the AP 102. With reference to Fig. 8, a description is given of a screen in a case where the multi-link communication is not enabled in step S602. In the example of Fig. 8, the multi-link function is disabled in an item 801. Thus, in this state, the channel of each link cannot be selected, and the BI value used in common by all the links cannot be set in an item 802.

If it is determined in step S602 that the multi-link communication is not enabled, single-link communication is performed, and therefore, a desired value may be selected as the BI value of each frequency band. Thus, the input of the BI of each frequency band is enabled. Since the AP 102 is set to the single-link communication, and settings common to all the links do not exist, the input of the BI common to all the links is disabled.

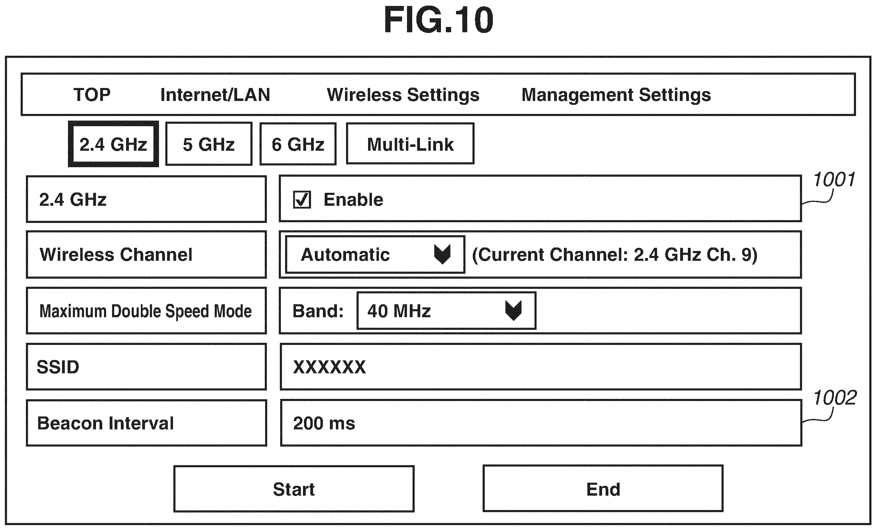

Fig. 10 illustrates an example of a settings screen for each frequency band in the AP 102. In Fig. 10, a screen for each frequency band is selected. If the multi-link communication is not set to enabled in Fig. 8, the disabling of the communication settings of each frequency band is cancelled as illustrated in Fig. 10.

If it is determined in step S601 that the multi-link communication settings screen is not selected, then in step S609, it is determined whether the settings screen for each frequency band is selected.

In the determination in step S609, for example, if a tab for the 2.4 GHz band is selected on the UI screen in Fig. 10, it is determined that the settings screen for each frequency band is selected. If it is determined in step S609 that the settings screen for each frequency band is selected, then in step S610, it is determined whether the multi-link communication is enabled on the settings screen for each frequency band. If the multi-link communication is enabled in step S610, the beacon transmission interval is set to a common value in the settings of each frequency band. Thus, in step S608, it is determined whether the start button of the AP 102 is pressed. If the start button is pressed, this AP setting process ends. If it is determined in step S610 that the multi-link communication is not enabled on the settings screen for each frequency band, then in step S611, the BI value of each frequency band is input. This corresponds to the input of an item 1002 in Fig. 10. In step S611, the BI value of each frequency band is input, and in step S608, it is determined whether the start button of the AP 102 is pressed. If the start button is pressed, the AP setting process ends.

According to the present exemplary embodiment, in a case where an instruction to perform multi-link communication is given, it is possible to perform control to set the beacon transmission intervals of established links to a common value. In a case where an instruction to perform the multi-link communication is not given, it is possible to set the beacon transmission interval of each frequency band. As described above, when the multi-link communication is performed, the beacon transmission intervals of the links are set to a common value, whereby it is not necessary to acquire the beacon transmission intervals of the links. Thus, it is possible to reduce overhead when the beacon transmission intervals are acquired from a plurality of links.

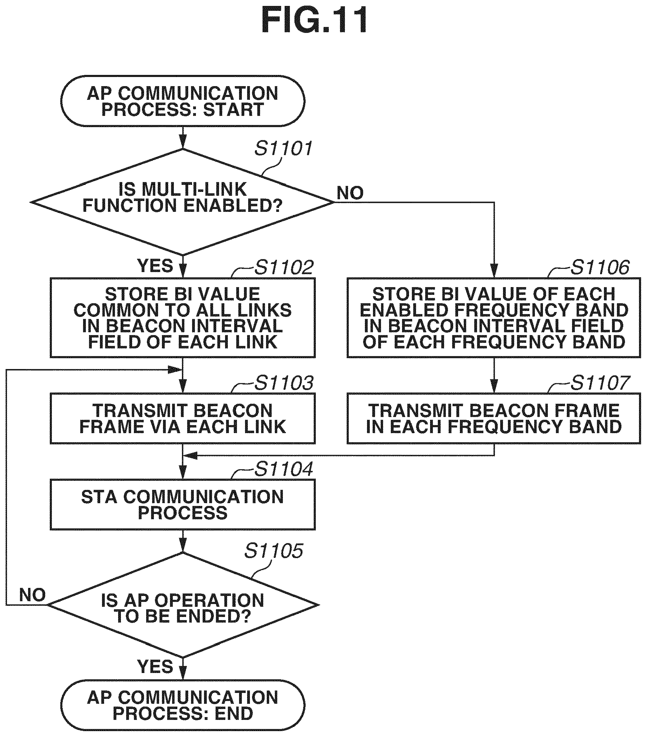

Fig. 11 is a flowchart illustrating the flow of a process performed by the control unit 202 of the AP 102 executing a program stored in the storage unit 201 of the AP 102 capable of executing multi-link communication.

This flowchart is started if a start button is pressed on a UI settings screen in the AP 102.

In step S1101, it is determined whether the multi-link function is enabled in the AP 102. If it is determined in step S1101 that the multi-link communication function is enabled, then in step S1102, the BI value common to all the links set on the multi-link communication settings screen is stored in the beacon interval field of each link. The beacon interval field storing the BI value common to all the links in step S1102 is included in a beacon frame, and the beacon frame is transmitted via each link (step S 1103). Alternatively, information indicating that the same BI value is set for each link may be stored in the beacon frame. The BI value and the information indicating that the same BI value is set for each link may be stored in the beacon frame and transmitted via at least one of the links established between the AP 102 and the STA 103.

If, on the other hand, it is determined in step S1101 that the multi-link communication function is not enabled, then in step S1106, the BI value set on the communication settings screen for each frequency band is stored in the beacon interval field of the frequency band. In step S1107, the beacon interval field of each frequency band is included in a beacon frame, and the beacon frame of the frequency band is transmitted. If the multi-link communication function is not enabled, AP in each frequency band independently operates, and therefore, the BI values of the frequency bands may be different from each other.

In step S1104, based on the information regarding the beacon frame received in step S1103, a communication process including a connection process with another STA and a data communication process is performed.

In step S1105, it is determined whether an end button is pressed in a UI of the AP 102. If the end button is pressed, this AP communication process ends.

According to the present exemplary embodiment, when multi-link communication is executed, it is possible to set the beacon transmission intervals of all established links to the same value, store the set beacon transmission interval in a beacon frame, and transmit the beacon frame. The beacon transmission interval is set to the same value and stored in the beacon frame, whereby a communication apparatus that desires to acquire the beacon transmission interval acquires the transmission interval of the beacon frame in any of the links and thereby can acquire the beacon transmission intervals of all the links. Since it is not necessary to acquire the beacon transmission intervals of the links, it is possible to reduce overhead when the beacon transmission intervals are acquired from a plurality of links.

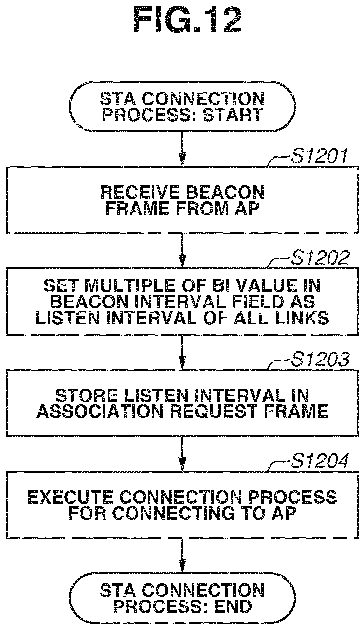

Fig. 12 is a flowchart illustrating the flow of a connection process on the STA 103 that is performed by the control unit 202 executing a program stored in the storage unit 201 of the STA 102.

This flowchart is started if a connection operation is executed through a UI unit of the STA 103. In a case where the STA 103 does not include a UI, the connection process may be automatically executed.

In step S1201, the STA 103 receives a beacon frame from the AP 102.

Next, in step S1202, the BI value as the beacon transmission interval is acquired from the beacon interval field of the acquired beacon frame, and a multiple of the BI value is set as the listen interval of all the links. While the STA 103 is operating in a power saving mode, the STA 103 regularly shifts between an awake state and a doze state. The listen interval refers to the period from when the STA 103 is in the awake state to when the STA 103 is in the awake state next to receive a beacon frame.

In step S1203, the set listen interval is stored in an association request frame. Finally, in step S 1204, the association request frame is transmitted to the AP 102, thereby executing a connection process including an association process.

A storage medium recording a program code of software for achieving the above functions may be supplied to a system or an apparatus, and a computer (a CPU or an MPU) of the system or the apparatus may read and execute the program code stored in the storage medium. In this case, the program code itself read from the storage medium achieves the functions of the above exemplary embodiments, and the storage medium storing the program code constitutes the above apparatus.

As the storage medium for supplying the program code, for example, a flexible disk, a hard disk, an optical disc, a magneto-optical disc, a CD-ROM, a CD-R, a magnetic tape, a non-volatile memory card, a ROM, or a DVD can be used.

Not only may the above functions be achieved by executing the program code read by the computer, but also the above functions may be achieved by an OS, while operating on the computer, performing a part or all of actual processing based on an instruction from the program code. OS is the abbreviation of operating system.

Further, the above functions may be achieved by writing the program code read from the storage medium to a memory included in a function extension board inserted into the computer or a function extension unit connected to the computer, and by a CPU included in the function extension board or the function extension unit performing a part or all of actual processing based on an instruction from the program code.

The present invention can also be achieved by the process of supplying a program for achieving one or more functions of the above exemplary embodiments to a system or an apparatus via a network or a storage medium, and of causing one or more processors of a computer of the system or the apparatus to read and execute the program. The present invention can also be achieved by a circuit (e.g., an application-specific integrated circuit (ASIC)) for achieving the one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Applications No. 2021-152317 filed September 17, 2021, which is hereby incorporated by reference herein.

## Claims

1. A communication apparatus comprising:
an establishment unit configured to establish a connection with another communication apparatus via a first link and a second link; and
a control unit configured to, in a case where the establishment unit establishes a connection with the another communication apparatus via the first link and the second link, perform control to set a transmission interval of a beacon frame to be transmitted via the first link and a transmission interval of a beacon frame to be transmitted via the second link to the same value.

2. The communication apparatus according to claim 1, further comprising a transmission unit configured to store the transmission interval of the beacon frame set to the same value by the control unit in a management frame compliant with an Institute of Electrical and Electronics Engineers (IEEE) 802.11 standard and transmit the management frame.

3. The communication apparatus according to claim 1 or 2, further comprising a reception unit configured to receive settings of the transmission interval of the beacon frame to be transmitted via the first link and the transmission interval of the beacon frame to be transmitted via the second link,
wherein in a case where the reception unit gives an instruction to execute communication via the first link and the second link, the reception unit performs control to set beacon transmission intervals of the first link and the second link to the same value.

4. The communication apparatus according to claim 3, wherein in a case where the reception unit gives an instruction to execute communication via the first link and the second link, the reception unit performs control not to set each of the beacon transmission interval of the first link and the beacon transmission interval of the second link.

5. The communication apparatus according to claim 3, wherein in a case where the reception unit does not give an instruction to execute communication via the first link and the second link, the reception unit performs control to set a beacon transmission interval of an indicated link.

6. A communication apparatus comprising:
an establishment unit configured to establish a connection with another communication apparatus via a first link and a second link;
an acquisition unit configured to acquire a beacon transmission interval included in a management frame received from the another communication apparatus and compliant with an IEEE 802.11 standard, the beacon transmission interval set to the same value between the first link and the second link; and
a setting unit configured to, based on the beacon transmission interval acquired by the acquisition unit, set a period when a beacon frame is received via the first link and a period when a beacon frame is received via the second link.

7. The communication apparatus according to claim 6, wherein the setting unit sets the period when the beacon frame is received to a multiple of the beacon transmission interval.

8. The communication apparatus according to claim 6 or 7, wherein the period when the beacon frame is received is stored in a management frame compliant with the IEEE 802.11 standard and is transmitted to the another communication apparatus.

9. The communication apparatus according to any one of claims 6 to 8, wherein the management frame is an association request frame.

10. The communication apparatus according to claim 9, wherein the period when the beacon frame is received is stored in a listen interval field of the association request frame.

11. The communication apparatus according to any one of claims 6 to 10, wherein the period when the beacon frame is received is a listen interval compliant with the IEEE 802.11 standard.

12. A communication method for a communication apparatus, the communication method comprising:
establishing a connection with another communication apparatus via a first link and a second link; and
in a case where a connection is established with the another communication apparatus via the first link and the second link, performing control to set a transmission interval of a beacon frame to be transmitted via the first link and a transmission interval of a beacon frame to be transmitted via the second link to the same value.

13. A communication method for a communication apparatus, the communication method comprising:
establishing a connection with another communication apparatus via a first link and a second link;
acquiring a beacon transmission interval included in a management frame received from the another communication apparatus and compliant with an IEEE 802.11 standard, the beacon transmission interval set to the same value between the first link and the second link; and
based on the acquired beacon transmission interval, setting a period when a beacon frame is received via the first link and a period when a beacon frame is received via the second link.

14. A program for causing a computer to function as the units of the communication apparatus according to any one of claims 1 to 11.
